# EUROPEAN PATENT APPLICATION

(11) **EP 2 302 571 A1**
(43) Date of publication of application: **30.03.2011**
(21) Application number: 09011812.6
(22) Date of filing: 16.09.2009
(51) Int. Cl.: G06Q 10/00

(54) **Method and apparatus for efficiently configuring a motion simulation device**

(71) Applicant: SIEMENS AKTIENGESELLSCHAFT, 80333 München (DE)
(72) Inventor: Davidich, Maria, Dr., 82061 Neuried (DE); Klein, Wolfram, Dr., 85579 Neubiberg (DE); Köster, Gerta, Dr., 81543 München (DE); Richter, Mathias, Dr., 80637 München (DE)

(57) **Abstract**

The present invention is directed towards a method and an apparatus (1) for efficiently configuring a motion simulation device. The present invention teaches how to find initial configuration parameters for configuring a motion simulation device. This is performed by selecting a provided model instance (PMI1; PMI2; PMI3) and configuring the motion simulation device as a function of the selected model instance (PMI1; PMI2; PMI3). The present invention finds application in simulation of entity motion behavior and especially in simulation of pedestrian behavior.

## Description

The present invention is directed to a method and an apparatus for calibration of a pedestrian stream simulator in real time and especially for efficiently configuring a motion simulation device. The present invention is furthermore directed to a computer program being adapted to perform said method and a data carrier which stores said computer program.

Simulators of pedestrian streams imitate the behavior of crowds in different infrastructures and places, such as buildings, stadiums, etc., for instance for statistical purposes, for administrative purposes and furthermore for safety reasons of pedestrians and traffic participants. One goal of pedestrian stream simulation is to gain improved control over crowd behavior and especially to predict crowd behavior. Off line simulations allow re-enacting several scenarios and critical situations and hence finding adequate measures for avoiding dangers and thus for improving security.

A variety of potentially dangerous scenarios is known. These scenarios range from environmental disasters to cultural events. In case of emergency it is required to evacuate people as fast as possible. In order to deliver reliable results crowd simulations must correctly reproduce crowd behavior. Hence, a crowd simulation model must capture important parameters of crowd behavior. Commonly known methods therefore apply a gradually increasing of details of modelling and comparing simulation results and empirical data. The underlying rules of interactions can be assumed to be general to a certain degree depending on a large number of parameters. Rather general rules of interaction cannot be expected to capture every situation and need to be adapted to the scenario of interest. Hence, the model of pedestrian streams must be calibrated. Calibration may refer to the adaption of the model of pedestrian streams through specific information of the real world. Commonly known dependencies are for example the basic environmental conditions as structural constraints imposed by the architecture of a surrounding building, as well as socio-cultural aspects.

In commonly known methods fundamental diagrams are used for predicting behavior. One may for instance apply an empirically derived fundamental diagram of pedestrian dynamics. Such a diagram of pedestrian dynamics may for instance indicate that there is a relation between the density of pedestrians and walking speed. Also a scenario dependency can be indicated, such as that the walking speed in one direction depends on the density of pedestrians moving in the opposite direction.

Commonly known methods do not introduce a fundamental diagram allowing predictions in all possible scenarios, cultures and locations. It is known to model pedestrian behavior as a function of pedestrian behavior parameters.

Commonly known methods perform pedestrian stream simulation and calibration thereof for known data from literature in an off-line way. Off-line refers to non-real-time calibrations of pedestrian stream simulation devices. Commonly known methods are complex and resource intense, which results in long time durations for calibration of a motion simulation device. What is therefore required is a method, which provides an initial configuration of the motion simulation device, which is reliable enough to require only a minimum of further fine tuning.

It is therefore an object of the present invention to provide a method and an apparatus for configuring a motion simulation device efficiently, allowing predictions of motion behaviors in real-time.

This object is solved by a method providing the features of patent claim 1.

Therefore, a method for efficiently configuring a motion simulation device is introduced, comprising the steps of:
storing a plurality of provided model instances in a model instance library, each provided model instance describing at least one motion behavior;
selecting a provided model instance from the model instance library being most similar to an observed further model instance according to a stored similarity metric; and configuring the motion simulation device as a function of the selected model instance.

It is possible to implement a motion simulation device especially for an automotive application scenario, such as pedestrian motion behavior predictions. Hence, pedestrian movements before and/or behind a car can be predicted, which may trigger an alarm signal or other safety measures. It is also of advantage to implement a software-based motion simulation device which allows motion behavior in different application scenarios, such as evacuation of people in case of an emergency.

A motion parameter may describe observed entity motion behaviour and can therefore be obtained from real world observation. Furthermore one can determine motion parameters manually for configuration of a motion simulation model. Hence, said motion parameter is obtained artificially. Said motion parameter may be used for affecting the behaviour of the motion simulation model in terms of configuration parameters for rules being used by the motion simulation model. A set of said artificially determined motion parameter can be summarized in deceleration classes. Deceleration classes can be used for indicating how much entities decelerate in case a certain density occurs. Thus, deceleration classes configure a rule being part of the motion simulation model, the rule modelling a deceleration behaviour.

A static parameter may be determined a priori to the simulation and are fixed as regards the observed time interval, such as the location based parameters. Different scenarios can be identified as a function of said static parameters. Model instances may be determined as a function of static parameters. It may be the case that only a selection of static parameters is known.

A model parameter may not be observable or configurable, but may affect a motion simulation model. A model parameter may be comprised in a deceleration class.

The motion simulation device may operate according to a motion simulation model, defining abstract motion parameters. A motion parameter is for instance a parameter describing characteristics of a motion of an entity. Hence, a motion parameter is not restricted to a parameter describing a pedestrian behavior but may furthermore be directed to movements of any entity, such as a car, a plane, a robot, a signal transmitting device and/or a traffic participant. A signal transmitting device is for instance a mobile phone which is carried through different cells and/or radio cells. Furthermore, motion of vehicles having a GPS-transmitter attached can be described by a motion parameter.

For obtaining entity motion predictions a motion simulation model can be applied. A motion simulation model generally describes entity motion behavior in an abstract way, which can be instantiated according to specific real world scenarios. A motion simulation model may indicate certain parameters without assigning values to said parameters. The motion simulation model can furthermore indicate that certain parameters may be required for predicting entity motion behavior. It is of advantage, to create a set of rules and/or an ontology to define said motion simulation model. A further possibility to implement said motion simulation model is to apply a software or a computer program product defining configuration data of a machine providing said motion simulation model. The person skilled in the art furthermore appreciates other ways to provide the motion simulation model.

The provided model instances can be created by instantiation of the motion simulation model. The observed further model instance can be created by instantiation of said motion simulation model according to observed further model instances. One can for instance empirically determine model instances, which are stored in a data base. Said stored model instances can then be provided. It is also possible, that several model instances, being stored in said data base are summarized, describing one scenario. One can for instance cluster similar model instances describing similar motion behavior and assign a label to said cluster. It is also possible to cluster motion parameters of the stored model instances and determine the most central set of motion parameters and/or the most central model instance out of each cluster. One may for instance identify a rush hour scenario in the city of Munich in the morning being described by motion parameters of high values. Furthermore one may identify further motion parameters for Munich at different day times as well as motion parameters for the city of Berlin at different daytimes. Out of the plurality of scenarios one may identify one characteristic scenario describing motion parameters labelled "mean motion parameters in Germany" by selecting one characteristic scenario and labelling it. The single scenarios of Munich and Berlin are hence summarized by one cluster forming an overall scenario of Germany.

For determining centrality known centrality metrics can be applied. Said model instances can for example be labelled "afternoon in Germany". Hence, the label indicates, that the motion parameters and/or the result model instance describes motion behavior of German people at a specific time, namely afternoon. A motion parameter is for instance a velocity of pedestrians. Said motion behavior is affected by the velocity of the pedestrians. A model instance being created as a function of the motion parameter velocity and possibly further motion parameters hence describes motion behavior of the specific country at a specific time. For creating a model instance library, further model instances can be provided. The model instance library possibly provides model instances describing the motion behavior "India at night". Hence, motion behavior of pedestrians in different countries at a different time can be stored in said model instance library.

Once, further model instances are observed. One can select a provided model instance from the model instance library being most similar to the observed further model instance. An observed further model instance may be observed by video tracking of a pedestrian and/or an entity motion stream or be identified by a sensor. It can be of advantage to simulate the provided model instances and/or the observed further model instance. For identification and adjustment of relevant motion parameters for configuring the motion simulation device one can have an initial guess for a suitable set of motion parameters by observing a set of motion parameters and further selecting one of the provided model instances as a function of the observed set of motion parameters. Hence, further motion parameters being implicitly comprised in the selected provided model instance are therewith obtained. In case the observed further model instance is created as a function of three observed motion parameters to more motion parameters can be predicted by selecting a provided model instance, which is created as a function of five motion parameters.

Selecting a provided model instance can be performed according to a stored similarity metric. Said stored similarity metric may define measurements indicating a distance between the provided model instances and the observed model instance. Said model instance can be represented by a curve in a diagram. A similarity metric may define an inverse difference between one curve representing a provided model instance and a further curve representing an observed model instance as a similarity measure.

Once the provided model instance is selected one can start an optimization of the selected model instance, which means to adapt the selected model instance to the present real world scenario. Therefore an optimal starting point for optimization of motion parameters being required to configure the motion stimulation device is created with a minimum of observed motion parameters.

In an embodiment of the method according to an aspect of the present invention the step of configuring the motion stimulation device comprises automatically calibrating the selected model instance.

This has the advantage that the selected model instance may be processed according to a real world application scenario.

In yet a further embodiment of the method according to an aspect of the present invention at least one of a group of model instances is created as a function of at least one model parameter, the group comprising: the provided model instance and the observed further model instance.

This provides the advantage that the model instances can be created as a function of several model parameters, also referred to as motion parameters.

In yet a further embodiment of the method according to an aspect of the present invention the provided model instance and the observed further model instance are created as a function of at least one observed model parameter.

This has the advantage that one can observe model parameters for instance by video tracking of pedestrians and/or entities.

In yet a further embodiment of the method according to an aspect of the present invention the step of storing the plurality of provided model instances comprises clustering the provided model instances.

This has the advantage that several model instances can be summarized as one model instance, which reduces complexity.

In yet a further embodiment of the method according to an aspect of the present invention the step of selecting a provided model instance comprises calculating a difference between the observed further model instance and the most central model instance of a cluster.

This has the advantage that the assignment of the observed model instance to the provided model instance can be performed considering the established clusters.

In yet a further embodiment of the method according to an aspect of the present invention the provided model instance and the observed further model instance comprise at least one of a group of further parameters, the group comprising: a number of pedestrians, a source where pedestrians come from, a target where pedestrians go to, a pedestrian behavior parameter, a time stamp, a pedestrian's gender, a pedestrian's age, a pedestrian's speed, a density of pedestrians and a pedestrian simulation parameter.

This has the advantage that the model instances comprise a number of model parameters and/or can be created as a function of said model parameters.

In yet a further embodiment of the method according to an aspect of the present invention the provided model instance and the observed model instance comprise characteristics of at least one observed pedestrian stream.

This has the advantage that not only entity motion streams but especially pedestrian motion streams can be predicted.

In yet a further embodiment of the method according to an aspect of the present invention the observed further model instance is created as a function of a video tracking of at least one pedestrian.

This provides the advantage that one or several pedestrians can be observed by video tracking, especially for determining the model parameters and/or the observed further model instance.

In yet a further embodiment of the method according to an aspect the present invention efficiently configuring comprises configuring in real time.

This has the advantage that the configuration of the motion stimulation device can be accomplished in real time, which allows the application of the introduced method in a great variety of application domains.

In yet a further embodiment of the method according to an aspect of the present invention the step of storing the plurality of provided model instances comprising pre-processing of the provided model instances.

This has the advantage that the provided model instances can be adapted as a function of an application domain and can furthermore be optimized according to mathematical procedures.

In yet a further embodiment of the method according to an aspect of the present invention at least one of the steps is performed on at least a part of at least one of the model instances.

This has the advantage that it is not necessary to consider the whole provided model instance and the whole observed model instance, which reduces complexity.

In yet a further embodiment of the method according to an aspect of the present invention the motion simulation device is configured to create predictions of pedestrian streams.

This has the advantage that predictions can be created as a function of simulation runs.

In yet a further embodiment of the method according to an aspect of the present invention at least one model instance is formed by a vector. This provides the advantage that the model parameters can be arranged in a vector for creation of the model instance. The person skilled in the art appreciates further ways to form a model instance, for example by a matrix, by processing a vector and/or by processing a matrix.

The object is also solved by an apparatus for efficient configuration of a motion simulation device.

Therefore an apparatus for efficient configuration of a motion stimulation device, especially for accomplishing one of the afore-mentioned methods is introduced. Said apparatus comprises:

A storage unit for storing a plurality of provided model instances being provided by a model instant provision device in a model instance library, each provided model instance describing at least one motion behavior;
a selection unit for selecting a provided model instance from the model instance library being most similar to an observed further model instance according to a stored similarity metric being provided by a similarity metric provision device; and
a configuration unit for configuring the motion simulation device as a function of the selected model instance.

The present invention furthermore provides a computer program being adapted to perform at least one of the afore-mentioned methods, as well as a data carrier, which stores said computer program.

Hence a method and an apparatus are introduced, which allow configuring a motion simulation device based on an initially observed model instance, which can be find tuned in further sub-steps. Due to the low complexity of the method for efficiently configuring the motion simulation device creating real time predictions of entity motion behavior are possible.

In the following possible embodiments of the method and the apparatus for efficiently configuring a motion simulation device are described with reference to the enclosed figures.
- Figure 1: shows a cellular automaton for modelling pedes- trian movements as being applied in an embodiment of the method according to an aspect of the pre- sent invention;
- Figure 2: shows the creation of a model instance as being applied in one embodiment of the method according to an aspect of the present invention;
- Figure 3: shows an illustration of a vector space as being applied by the model instance library according to an aspect of the present invention;
- Figure 4: shows a diagram representing several model in- stances; according to an aspect of the present in- vention;
- Figure 5: shows a flow diagram of a method for efficiently configuring a motion simulation device according to an aspect of the present invention;
- Figure 6: shows a detailed flow diagram of a method for ef- ficiently configuring a motion simulation device according to an aspect of the present invention;
- Figure 7: shows a detailed block diagram of an apparatus for efficient configuration of a motion simulation de- vice according to an aspect of the present inven- tion; and
- Figure 8: shows a diagram representing results of an opti- mized configuration of a motion simulation device according to an aspect of the present invention.
Same reference signs are denoted to the same aspects if not indicated otherwise.

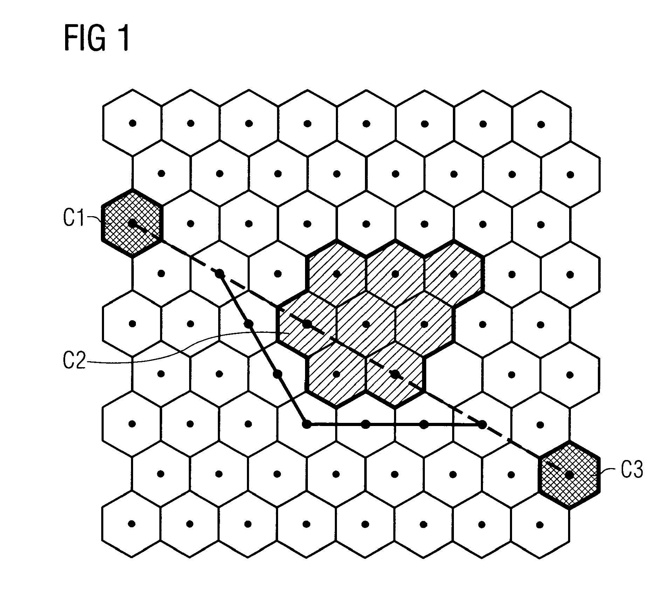

Figure 1 shows a cellular automaton based on a grid with hexagonal cells as being used by the method for efficiently configuring the motion simulation device according to an aspect of the present invention. According to an embodiment of the present invention pedestrian or entity motion can be simulated using a discretization of the simulation area by means of cells, which are hexagonal in the present embodiment. Said cells may in other embodiments be triangular or rectangular, among others. At every time step of the simulation procedure of an entity motion a cell has a state being defined by the number of pedestrians or entities being located on this cell. Pedestrians or entities move from one cell to another thus changing the state of each of the cells.

In the present embodiment an entity is located at cell C1 and desires to move forward to cell C3. The entity being located in cell C1 may proceed directly to cell C3, which is indicated in the present figure 1 by a dashed line. As the entity being located in C1 encounters an obstacle, for instance cell C2, it may not be possible to move directly from the location C1 to the cell C3. In this embodiment it may be required to move around the obstacle, for instance cell C2, which is indicated by a line in the present figure 1. The cell model as demonstrated in figure 1 may be a part of a motion simulation model. Different velocities of entities can be implemented by allowing the entity to proceed over several cells per simulation step. Hence, in the present embodiment velocity can also be referred to as cell speed indicated by the number of cells covered per simulation step.

In the present embodiment the entity moving from cell C1 to a cell C3 is a pedestrian. Cell C1 represents an elevator transporting pedestrians from a subway station to the surface. Cell C1 therefore acts as a source of pedestrians. Pedestrians may proceed across a public place by moving around a shop being represented by cell C2 and proceed to an exit, being represented by cell C3. Therefore, cell C3 acts as a pedestrian sink.

The basic cell model, as being introduced by the present figure 1, leaves degrees of freedom to be chosen, such as the individual speeds of pedestrians. Individuals may move at a specific velocity, which can be a sample of a Gaussian random distribution, parameterized by mean and standard deviation that depend on circumstances like gender, age, day time, place, among others. In crowds, pedestrians speed decreases because of obstructions imposed by other pedestrians. Deceleration of pedestrians may also depend on the density of pedestrians. This aspect can be modelled by deceleration classes and slow down factors for velocities depending on the occupancy of neighbouring cells by other pedestrians. It may therefore be the case, that in cell C1 several pedestrians are located. It may further be possible, to define a threshold of pedestrians per cell, which indicates, that the specific cell holds the state of being occupied and therefore representing an obstacle for further pedestrians.

The cell model as being described in the present figure 1 may be a part of the motion simulation model, while the modelling of pedestrian or entity motion behavior is by no means restricted to the cell model. The person skilled in the art therefore appreciates further implementations of a motion simulation model, such as an ontology, a set of rules, a formal model and/or a semi-formal model.

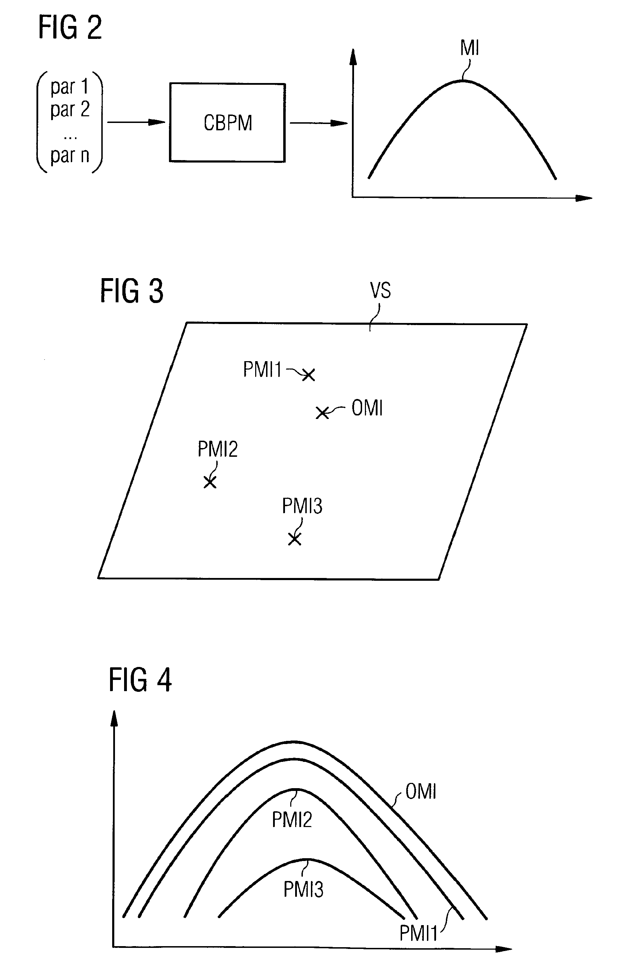

Figure 2 shows a schematic illustration of the creation of a model instance MI as being applied in an embodiment of the method according to an aspect of the present invention. Therefore, motion parameters par1, par2, ..., parn are provided, for instance in a vector representation. Each motion parameter par1, par2, ..., parn has one value assigned. The at least one motion parameter may be referred to as a motion parameter vector. The motion parameter vector serves in the present embodiment as an input for a crowd behavior prediction machine CBPM, which can be implement by a computer program product. In the present embodiment one motion parameter par1 is formed by a density parameter. The density parameter describes a number of entities being located on one square meter. A further motion parameters par2 may for instance represent a flow of entities. The resulting model instance MI may for instance be represented in a diagram, which indicates the density on the x-axis and the flow on the y-axis. A model instance may generally be represented in an n-dimensional space, wherein n refers to the number of motion parameters by which the model instance is formed. The person skilled in the art may furthermore appreciate other representations of a model instance.

It can be necessary that further steps as previously mentioned required for creation of a model instance are performed. Depending on the application scenario it can be of advantage to create the first model instance and the second model instance as a function of a first motion simulation model and a further model, which is instantiated for obtaining the second model instance.

In a further embodiment of the creation of a model instance MI as being applied in an embodiment of the method according to an aspect of the present invention the motion parameters par1, par2, ... , parn are calculated by the crowd behaviour prediction machine CBPM. The motion parameters par1, par2, ... , parn can be calculated as a function of further motion parameters, which for instance describe a surface. Said surface may affect the motion behaviour of the entities. A relation of calculated motion parameters par1, par2, ... , parn may be represented by the model instance MI as being calculated by the crowd behaviour prediction machine CBPM. The person skilled in the art appreciates further representations of the model instance MI, other than a curve. The crowd behaviour prediction machine CBPM can be designed to calculate different representations of the model instance, such as any kind of diagram or any kind of output format. It may be of advantage to determine the input parameters of the crowd behaviour prediction machine CBPM artificially, for example by simulation runs, deriving the input parameters theoretically and/or by further calibration of initial input parameters.

The person skilled in the art appreciates further types of parameters being applied in the aforementioned embodiments. The motion parameters par1, par2, ..., parn may for instance comprise model parameters.

Figure 3 shows a plurality of provided model instances PMI1, PMI2, PMI3, which are stored in a database. Each of the provided model instances PMI1, PMI2, PMI3 describes at least one motion behavior of an entity. Each of the provided model instances is created by one model parameter as depicted in figure 2. Each model parameter vector comprises a number n of parameters, which are concrete values of a real world scenario. Therefore, the model parameter vector, which serves as input parameter for the creation of the first provided model instance PMI1 may comprise the values (0.5, 0.8, ..., 0.7). Hence, one can compare model instances by comparing the respective model parameter vectors and/or compare the provided model instance PMI1, PMI2, PMI3.

In the present embodiment as being depicted in figure 3, each of the process model instances PMI1, PMI2, PMI3 are represented by their respective model parameter vectors. Comparing model instances may be performed as a function of a similarity metric being applied on pairwise vectors. For comparing model instances one can create a vector space VS comprising a number n of dimensions. It is of advantage to create a vector space VS, in which each of the model instances to be compared can be arranged. Hence, the number of dimensions of the vector space VS may be equal to the dimension of the model parameter vector comprising the most parameters. For determining a similarity between model instances it is possible to apply vector similarity matrix, such as the cosine similarity.

For configuring the motion simulation device, at least one model instance is observed. The observed model instance OMI also comprises a model parameter vector and/or is created as a function of a model parameter vector. The observed first model instance OMI is arranged in the vector space VS. As each of the model instances describes one real-world scenario said vector space VS can also be referred to as a space of scenarios. For identification of an optimal starting point for configuring motion simulation device the observed further model instance OMI is assigned to one provided model instance PMI1, PMI2, PMI3. Hence, the similarity of the observed further model instance OMI is calculated as regards each of the provided model instances PMI1, PMI2, PMI3. It may be of advantage, to cluster several provided model instances OMI for obtaining one single model instance, for example the model instance PMI1. As each of the model instances PMI1, PMI2, PMI3, OMI describes a motion behavior of an entity, one can select one typical motion behavior out of several motion behaviors. This means to identify a central model instance out of a plurality of model instances, the selected model instance being the most central model instance out of a plurality of model instances.

In the present embodiment it is identified that the provided model instance PMI1 is most similar to the observed model instance OMI. Hence, the motion simulation device can be configured using the model parameter vector of the first provided model instance PMI1. It may also be of advantage, to perform further fine tuning as a function of the model parameter vector of the first provided model instance PMI1. Hence, the motion simulation device is configured by efficiently identification of a reliable model parameter vector. Therefore, only a few model parameters have to be observed, which allows in the further substeps to identify a model instance out of a model instance library being suitable in especially the observed scenario.

Figure 4 shows model instances PMI1, PMI2, PMI3, OMI each being represented by one curve of a diagram. In the present embodiment the x-axis of the diagram represents a density, which is defined as the number of people per square meter. Along the y-axis a flow is represented, being defined as number of persons/m*s. The provided model instances PMI1, PMI2, PMI3 are received from a database comprising model instance library. The observed model instance OMI is in the present embodiment obtained from a video observation of pedestrians. As the observed model instance OMI may be unreliable, the most similar model instance is selected for configuring the motion simulation device. In case similarity between model instances PMI1, PMI2, PMI3, OMI is defined as the inverse difference between the respective curve, each representing one model instance PMI1, PMI2, PMI3, OMI one identifies the first provided model instance PMI1 as the curve being most similar to the observed model instance OMI. Therefore, in the present embodiment the first provided model instance PMI1 and/or the model parameter vector, which serves as the input parameter for creating said first provided model instance PMI1 is applied for configuring the motion simulation device. One may also apply further steps for configuring the motion simulation device, such as fine-tuning.

The present invention is by no means restricted to a certain number of provided model instance but considers any number of provided model instances. Furthermore, the person skilled in the art appreciates further ways to represent a model instance and therefore also further ways to determine similarity of model instances.

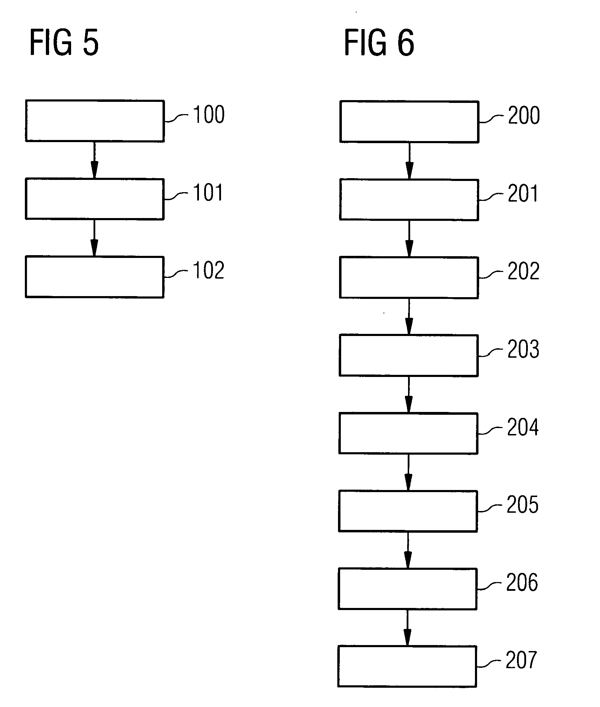

Figure 5 shows a flow diagram of a method for efficiently configuring a motion simulation device according to an aspect of the present invention, comprising the steps of:
storing 100 a plurality of provided model instances PMI1, PMI2, PMI3 in a model instance library, each provided model instance PMI1, PMI2, PMI3 describing at least one motion behavior;
selecting 101 a provided model instance PMI1, PMI2, PMI3 from the model instance library being most similar to an observed further model instance OMI according to a stored similarity metric; and
configuring 102 the motion simulation device as a function of the selected model instance PMI1, PMI2, PMI3.

The afore mentioned steps can be performed iteratively and/or in a different order.

Figure 6 shows a detailed flow diagram of a method for efficiently configuring a motion simulation device according to an aspect of the present invention.

In step 200 at least one model instance PMI1, PMI2, PMI3 is provided. Providing model instances PMI1, PMI2, PMI3 may furthermore comprise selecting model instances PMI1, PMI2, PMI3 from a plurality of model instances. One can for instance determine model instances PMI1, PMI2, PMI3 empirically and/or derive said model instances PMI1, PMI2, PMI3 theoretically.

After providing said model instances PMI1, PMI2, PMI3 they are stored in a model instance library. A model instance library can comprise a data base and/or a content management system. The content management system can be designed to store said model instances PMI1, PMI2, PMI3 along with further meta data. Further meta data may for instance comprise an author, a version and/or a time stamp indicating the creation date of said stored model instances PMI1, PMI2, PMI3. The provided model instances PMI1, PMI2, PMI3 can be stored in a storage device being comprised in the motion simulation device.

In a subsequent step 202 a similarity metric is provided, which indicates a similarity measure between the provided model instances PMI1, PMI2, PMI3 and at least one further, may be observed, model instance. Said similarity metric as being provided in step 202 may furthermore indicate how to select one model instance according to a specific real-world-scenario. The provided similarity metric may for instance define that model instances being represented by a curve can be evaluated as regards the similarity by an inverse difference of at least one part of pairwise curves.

In a subsequent step 203 a further model instance OMI is observed. This can be accomplished by video material analysis. The person skilled in the art appreciates further ways to observe a model instance OMI. The observed model instance may be extracted from simulation data. It may further be possible, that the observed model instance OMI is simulated, for instance by a pedestrian behavior prediction machine as being depicted in fig 2.

In a further subsequent step 204 at least a selection of the provided model instances PMI1, PMI2, PMI3 is compared with the observed model instance OMI. Comparing may furthermore comprise calculating a similarity value. The calculation of said similarity value may furthermore comprise applying mathematical approaches as a function of the presentation of the model instances. For comparing said model instances it can be necessary to transform one representation of a model instance into a further representation of a model instance. The similarity of model instances can also be calculated as a function of the provided similarity metric as being obtained in step 202.

In a subsequent step 205 one model instance PMI1, PMI2, PMI3 is selected as a function of the calculated similarity value in step 204. Selecting one model instance PMI1, PMI2, PMI3 may furthermore comprise applying in the similarity metric as being provided in step 202.

In an optional further substep 206 fine-tuning is accomplished of the selected model instance as being selected in step 205. Hence, the selected model instance of step 205 can be named as a first guess or as a first approach for identifying configuration data for configuring the motion simulation device. After the selected model instance PMI1, PMI2, PMI3 has been fine-tuned in step 206 the motion simulation device is configured in step 208 as a function of the fine-tuned model instance.

Therefore the mentioned steps may be performed differently and/or in different order.

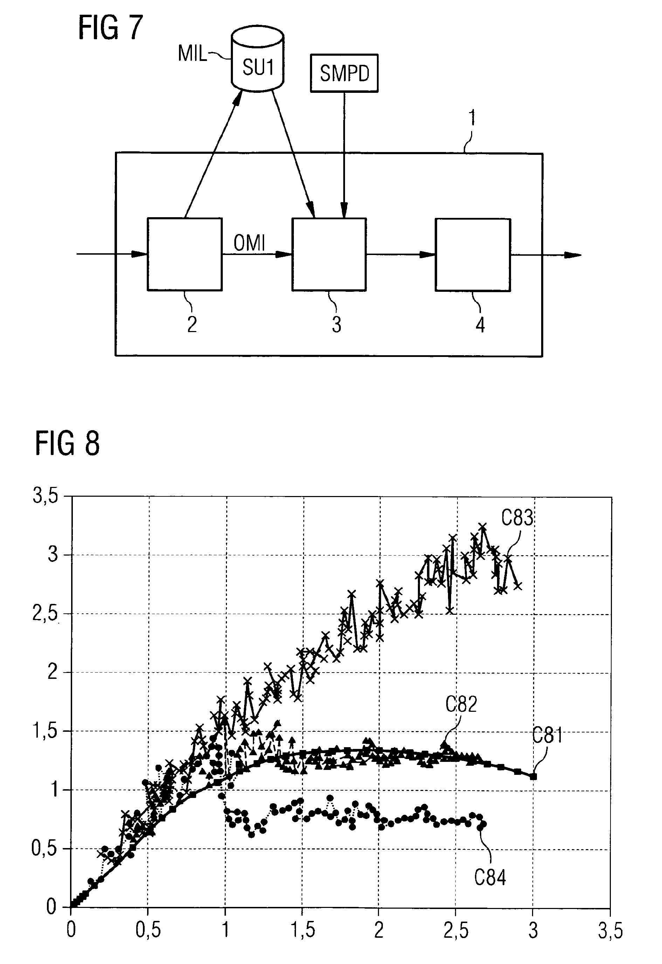

Figure 7 shows a detailed block diagram of an apparatus 1 for efficient configuration of a motion simulation device according to an aspect of the present invention. Said apparatus 1 comprises:
A storage unit SU1 for storing a plurality of provided model instances PMI1, PMI2, PMI3, being provided by a model instance provision device 2 in a model instance library MIL, each provided model instance PMI1, PMI2, PMI3 describing at least one motion behavior;
A selection unit 3 for selecting a provided model instance PMI1, PMI2, PMI3 from the model instance library MIL being most similar to an observed further model instance OMI according to a stored similarity metric being provided by a similarity metric provision device SMPD; and a configuration unit 4 for configuring the motion simulation device as a function of the selected model instance PMI1, PMI2, PMI3.

In the present embodiment of the apparatus 1 the storage unit comprises a model instance library MIL, which is implemented as an external storage device. Furthermore the observed further model instance OMI is provided by the model instance provision device 2. The provided model instances PMI1, PMI2, PMI3 and the further observed model instance OMI can possibly be provided by different means. The similarity metric provision device may be implemented as a storage unit and/or a database system.

In one possible embodiment the apparatus 1 is designed to perform the steps of identification of suitable parameters, building a library of scenarios and labelling of scenarios, selection of the scenario that matches the real situation and/or partial online calibration of human behavior parameters. As these steps may be performed in accordance with the embodiment as being shown in figure 6 as well as according to a further procedure the steps being performed by the apparatus 1 are described in the following.

In the following identification of suitable parameters is described:
Pedestrian stream simulations imitate the flow of a crowd at a certain place at a certain time. Input parameters regarding the "where", the "when" and the "who" are required.
Parameters concerning the place, the "where", once topology and area of observation is chosen, the topology of the infrastructure is static in the frame of time and do not need on-line adjustment.

The time of day of the simulation can be considered, because it has an effect on the number of people present, the choice where people go and how they walk.

Simulation models for pedestrian streams represent these aspects by several input values, such as:
- The number of persons in the simulation area and their distribution and hence the crowd density in the simulation area. This data can be extracted on-line from video data. Restrictions are coverage and measurements errors. That is, cameras may not be installed at every spot so that full area of interest is not totally covered and the measurements usually are subject to error. The number of persons and distribution and hence the crowd density can be read into the simulation. In case of incomplete data, the data must be extrapolated.

- The assignments of targets or attraction points to which people walk and identification of sources where people come from. From video data, where people are traced, a distribution of the goals and sources can be extracted. Radio technologies may also be used. One can assign targets and sources in the simulations stochastically. That is, in an area of measurement a simulated person is assigned to a certain goal with a probability that corresponds to the statistical distribution extracted from the measurement. A source e.g. entrance, "produces" new persons at rate as observed.
- The human behavior parameters that vary with the type of crowd, such as nationality, culture, gender distribution, age distribution and also the time of day, such as level of fitness, exhaustion or even the weather. All these differences ultimately show their effect in the way people walk - as individuals in an open space and as members in a crowd. There is an aggregated model that is considered to be suitable to capture most - or at least many of the relevant - behavioral parameters in a very simple concept: The dependency of the walking speed on the density. Or, equivalently, the dependency of the flow on the density. This dependency is expressed in the so-called fundamental diagrams. One can calibrate the human behavior by adjusting the walking speed to the fundamental diagram.

In the following building a library of scenarios and labelling of scenarios is described:
One can introduce a learning phase to the simulator that may last several days and is performed prior to on-line usage. During that phase, the model "learns" characteristic parameters for a variety of scenario and "remembers" the best values for each of them. In particular, regarding human behavior, it does not only memorize the fundamental diagram for each scenario, but also the optimal calibration parameters. These optimal calibration parameters are calculated by the automatic method described in a former invention. That is, after collecting the data for different scenarios, one obtains a library of optimal parameters for different scenarios.

This phase can be performed in the following way. First, the data is collected and a finite number of scenarios are extracted. For the purpose of pedestrian stream simulations one can label the scenarios by their differences with respect to the relevant parameters: number of persons, distribution of persons, distribution of goals and sources, human behavior as captured in the fundamental diagram. This has the advantage that the number of labels is very restricted, whereas labels based on "natural parameters" such as time of day, type of event, are countless and may be very hard to differentiate. This possibly leads to a large number of rather vague scenarios. However, the number of extracted scenarios should be as low as possible.

To allow an easy interpretation for the user one can match the scenario labels to additional scenario descriptions. Examples for a train stations may be: "Work day morning, commuter crowd", or "30 minutes after soccer game".

Regarding the fundamental diagram, that is, the dependency between density and speed, interpreted here as, the human behavior, we propose a further refinement is possible:
1. First the collected data should be approximated with a curve. This method is appropriate in case when deviations and fluctuations are not large. This is the reference curve for this approach.
2. If the fluctuations are rather large, it is better to divide the whole data into small regions and to calculate the average separately in every region. This forms the reference points.
3. Another way to cope with fluctuations is to extract a portfolio of fundamental diagrams for sub regions. E.g.: A set of fundamental diagrams for a station: for the main platform, for a pedestrian tunnel, for a shopping area.
4. These fundamental diagrams at sub-regions may be evaluated even at different time points: in the morning, after lunch, etc.

In the following selection of the scenario that matches the real situation is described:
The method selects, for each real life situation, an appropriate scenario from the library. This is achieved by comparing to the life measurements of the parameters. This comparison may again be an optimization problem of which the solution may well result in further inventions.

In the following partial on-line calibration of human behavior parameters is described:
The method suggests improving the choice of parameters further by using a parameter set as initial guess for an automatic calibration of the most important behavioral parameters.

The system continuously extracts characteristics and optimal parameter values from the library. The system extracts those parameters that match the reference scenario best. In regular time intervals the motion parameters are measured and respective motion parameters may be identified in the library. The method therefore periodically extracts suitable parameter values from the library.

These typical scenarios guarantee that the parameters of the model are already rather well adjusted. After that, it is possible to perform a short real-time automatic calibration of the behavioral model, because the calibration is fast when one starts with already good initial adjustment. Moreover, performing this kind of refining of a model allows calibrating the simulation in some small but very sensitive areas of values.

For example, for an evaluation of a subway station based on previous measurements the typical values of pedestrian densities are already known for this particular scenario. Therefore, it is not necessary to calibrate the whole possible set of densities, but only those, which are relevant for this particular scenario. The reduction of calibration area allows accelerating automatic calibration by a factor of 5. It is not necessary to calibrate the model for the whole possible area of densities, but for the area of densities which are relevant for a particular scenario.

The number of persons, targets or attraction points, human behavior parameters and further parameters may be applied as model parameters for creation of model instances PMI1, PMI2, PMI3, OMI. A simulation model may for instance be formed by a model instance PMI1, PMI2, PMI3, OMI, each describing for example a scenario.

Figure 8 shows a comparison of calibrations for random initial values and values according to a selected model instance according to an embodiment of the present invention. The diagram being depicted in figure 8 shows a reference curve C81, a result of calibration for two minutes with a fitness value of 1.344 C82, a curve without calibration C83 and a curve representing results of calibration for two minutes random initial conditions and a fitness value of 0.304 C84. In the diagram as being depicted in the present figure 8 the x-axis represents a density, being defined as persons per square meters while the y-axis represents a flux. Hence, a comparison is shown of calibrations for random initial values, indicated by the curve C84 and selected values indicated by curve C82, a reference curve as regards the calibration C81 and a curve representing uncalibrated values C83.

In the present embodiment the introduced method for configuring the motion simulation device is applied for calibration of pedestrians' velocities for different densities. As reference curve one can for instance choose a modified Weidman fundamental diagram and a threshold accepting algorithm being applied as a local search algorithm. In the following two examples are considered:
1. Running the threshold accepting algorithm starting with random initial values for deceleration classes parameters.
2. Running the same optimization algorithm, starting with good initial guess, for instance previously found parameter values for an unmodified Weidman curve.

In both cases the calibration is performed in a limited time period, for instance 2 minutes.
1. In two minutes for random values of deceleration parameter the calibration is still not precise, with fitness = 0.304. Fitness measures the quality of the represented solution. As fitness one can propose to use a value which is inversely to the sum of squares between a diagram obtained from simulations and the chosen fundamental diagram. In general one can choose other functions of fitness, as for example, one can add different weight coefficients for different parts of diagrams. Due to normalisation the fitness is acceptable, when its value may be around 1. Only in ten minutes time the calibration becomes rather good with a fitness value of 1.344. Fitting a model in every certain case, one has to decide how precise it can be. Based on this, the threshold for fitness as a measure of precision can be chosen. The higher the fitness, the more precise is a model. Fitness values being significantly bigger than 1 denote a good precision. For example, for pedestrian stream simulations, the fitness value of about 1 represents an acceptable fitness and fitness values being significantly smaller than 1 represent a not acceptable fitness.
2. After one minute of calibration with a preselected value for deceleration parameter, the simulation precision is already acceptable with a fitness value of 0.9. In two minutes time for preselected values for deceleration classes the calibration is already precise with fitness of 1.304.

Due to normalisation the fitness value is acceptable when its value is around 1, therefore the fitness value of 0.9 is acceptable, the value being obtained in one minute for simulations with preselected value. The fitness value of 0,304 is too low, the value being obtained in two minutes time for simulations with random initial values. Since one can obtain a good fitness in two minutes with preselected values and the comparable fitness in ten minutes time for random initial values, one can conclude that the proposed method allows to accelerate the calibration by a factor of 5. Using the proposed method one can run calibration in the background and adapt real data for instance every minute, since one obtained acceptable prevision in one minutes time of calibration, whereas, if one starts calibration with random initial values, calibration lasts too long and can not be applied for online calibration anymore.

## Claims

1. A method for efficiently configuring a motion simulation device, comprising the steps of:
a) storing (100) a plurality of provided model instances (PMI1; PMI2; PMI3) in a model instance library (MIL), each provided model instance (PMI1; PMI2; PMI3) describing at least one motion behavior;
b) selecting (101) a provided model instance (PMI1; PMI2; PMI3) from the model instance library (MIL) being most similar to an observed further model instance (OMI) according to a stored similarity metric; and
c) configuring (102) the motion simulation device as a function of the selected model instance (PMI1; PMI2; PMI3).

2. The method according to claim 1, wherein the step of configuring the motion simulation device (102) comprises automatically calibrating the selected model instance (PMI1; PMI2; PMI3).

3. The method according to claims 1 or 2, wherein at least one of a group of model instances (PMI1; PMI2; PMI3) is created as a function of at least one model parameter, the group comprising: the provided model instance (PMI1; PMI2; PMI3) and the observed further model instance (OMI).

4. The method according to claims 1 to 3, wherein the provided model instance (PMI1; PMI2; PMI3) and the observed further model instance (OMI) are created as a function of at least one observed model parameter.

5. The method according to claims 1 to 4, wherein the step of storing (100) the plurality of provided model instances (PMI1; PMI2; PMI3) comprises clustering the provided model instances (PMI1; PMI2; PMI3).

6. The method according to claim 5, wherein the step of selecting (101) a provided model instance (PMI1; PMI2; PMI3)comprises calculating a difference between the observed further model instance (OMI) and the most central model instance (PMI1; PMI2; PMI3) of a cluster.

7. The method according to claims 1 to 6, wherein the provided model instance (PMI1; PMI2; PMI3) and the observed further model instance (OMI) comprise at least one of a group of further parameters, the group comprising: a number of pedestrians, a source where pedestrians come from, a target where pedestrians go to, a pedestrian behavior parameter, a time stamp, a pedestrian's gender, a pedestrian's age, a pedestrian's speed, a density of pedestrians and a pedestrian simulation parameter.

8. The method according to claims 1 to 7, wherein the provided model instance (PMI1; PMI2; PMI3) and the observed further model instance (OMI) comprise characteristics from at least one observed pedestrian stream.

9. The method according to claims 1 to 8, wherein the observed further model instance (OMI) is created as a function of a video tracking of at least one pedestrian.

10. The method according to claims 1 to 9, wherein efficiently configuring comprises configuring in real time.

11. The method according to claims 1 to 10, wherein the step of storing (100) the plurality of provided model instances (PMI1; PMI2; PMI3) comprises pre-processing of the provided model instances (PMI1; PMI2; PMI3).

12. The method according to claims 1 to 11, wherein at least one of the steps (100; 101; 102) is performed on at least a part of at least one of the model instances.

13. The method according to claims 1 to 12, wherein the motion simulation device is configured to create predictions of pedestrian streams.

14. The method according to claims 1 to 13, wherein at least one model instance (PMI1; PMI2; PMI3; OMI) is formed by a vector.

15. An apparatus (1) for efficient configuration of a motion simulation device, especially for accomplishing the method of claims 1 to 14, said apparatus (1) comprising:
a) a storage unit (SU1) for storing a plurality of provided model instances (PMI1; PMI2; PMI3) being provided by a model instance provision device (2) in a model instance library (MIL), each provided model instance (PMI1; PMI2; PMI3) describing at least one motion behavior;
b) a selection unit (3) for selecting a provided model instance (PMI1; PMI2; PMI3) from the model instance library (MIL) being most similar to an observed further model instance (OMI) according to a stored similarity metric being provided by a similarity metric provision device (SMPD); and
c) a configuration unit (4) for configuring the motion simulation device as a function of the selected model instance (PMI1; PMI2; PMI3).

16. A computer program being adapted to perform the method of claims 1 to 14 on a computer.

17. A data carrier which stores a computer program according to claim 16.
